# EUROPÄISCHE PATENTSCHRIFT

(11) **EP 1 961 623 B1**
(45) Veröffentlichungstag und Bekanntmachung des Hinweises auf die Patenterteilung: **13.03.2013**
(21) Anmeldenummer: 08100154.7
(22) Anmeldetag: 07.01.2008
(51) Int. Cl.: B60R 21/013

(54) **Steuergerät zur Ansteuerung von Personenschutzmitteln, Vorrichtung zur Ansteuerung von Personenschutzmitteln und Verfahren zur Erzeugung eines Prüfsignals für wenigstens einen Unfallsensor**
Control device for controlling personal security measures, device for controlling personal security measures and method for creating a test signal for at least one accident sensority measures and method
Appareil de commande destiné à la commande de moyens de protection des personnes, dispositif de commande de moyens de protection des personnes et procédé de production d'un signal de contrôle pour au moins un capteur d'accident

(30) Priorität: 21.02.2007 DE 102007008386
(43) Veröffentlichungstag der Anmeldung: 27.08.2008
(73) Patentinhaber: ROBERT BOSCH GMBH, 70442 Stuttgart (DE)
(72) Erfinder: Gunselmann, Christian, 65843 Sulzbach (DE); Adam, Boris, 71126 Gaeufelden (DE)

(56) Entgegenhaltungen:
- EP-A2- 0 945 315
- DE-A1- 10 149 332
- DE-A1- 19 538 337
- DE-A1-102005 036 050
- DE-C1- 19 811 070

## Beschreibung

### Stand der Technik

Die Erfindung betrifft ein Steuergerät zur Ansteuerung von Personenschutzmitteln bzw. eine Vorrichtung zur Ansteuerung von Personenschutzmitteln bzw. ein Verfahren zur Erzeugung eines Prüfsignals für wenigstens einen Unfallsensor nach der Gattung der unabhängigen Patentansprüche.

Aus der gattungsbildenden DE 10149332 A1 ist es bereits bekannt, in einer Initialisierungsphase Status- und Fehlermeldungen von einem Sensor an ein Steuergerät zu übertragen.

Die DE 198 11 070 C1 zeigt ferner einen Unfallsensor des Insassenschutzsystems, der eine interne Fehlerüberprüfung durchführt und der bei Fehlererkennung dauerhaft ein einer Steuereinrichtung zugeführtes Meldesignal generiert. Bei Empfang des Meldesignals sperrt die Steuereinrichtung die Zündbereitschaft und erzeugt ein Warnsignal. Bei einem Unfall wird vor Zündung des Insassenschutzsystems das Meldesignal nochmals abgefragt, das heißt der Sensor-Zustand überprüft. Wenn der Unfallsensor keinen Fehler meidet, wird die Auslösung getriggert, andernfalls aber gesperrt. Dadurch lassen sich ungewollte Auslösungen des Insassenschutzsystems verhindern.

Die EP 0 945 315 A2 zeigt ein Insassenschutzsystem, insbesondere in Kraftfahrzeugen, bei dem die Signale des Energie- und Datenaustausches zwischen einer Zentraleinheit und den jeweils den Insassenschutzeinrichtungen zugeordneten Steuermodulen mittels einer zusätzlichen Überwachungseinrichtung überwacht werden.

Die DE 10 2005 036 050 A1 zeigt ein Verfahren zur Übertragung von wenigstens einem Datentelegramm von wenigstens einem Sensor an ein Steuergerät zur Ansteuerung von Personenschutzmitteln.

Die DE 195 38 337 A1 zeigt ein Sicherheitssystem, Insbesondere für Fahrzeuge zur Personenbeförderung, mit zumindest zwei Sicherheitseinrichtungen und mit einer entsprechenden Anzahl von Schaltungskomponenten, von denen jede im Bedarfsfall ein Auslösesignal an die zugeordnete Sicherheitseinrichtung ausgibt und eine Selbsttesteinrichtung mit zugeordneten Speicherbereichen zum Speichern von Testdaten umfasst.

Die DE 101 49 332 A1 zeigt ein Verfahren zur Übertragung von Daten von für wenigstens einem Sensor zu einem Steuergerät, wobei ein Wertebereich, der zur Kodierung der zu übertragenden Daten zur Verfügung steht, in drei Teile aufgeteilt wird.

### Offenbarung der Erfindung

Das erfindungsgemäße Steuergerät zur Ansteuerung von Personenschutzmitteln bzw. die erfindungsgemäße Vorrichtung zur Ansteuerung von Personenschutzmitteln bzw. das erfindungsgemäße Verfahren zur Erzeugung eines Prüfsignals für wenigstens einen Unfallsensor mit den Merkmalen der unabhängigen Patenansprüche haben dem gegenüber den Vorteil, dass ein Prüfsignal für einen Unfallsensor mit geringem Aufwand bezüglich der Kosten sicher überprüft werden kann und ggf. eine Korrektur vorgenommen werden kann. Das Prüfsignal wird beispielsweise zur Ansteuerung einer Anzeige oder für eine Fernwartung verwendet. Das Prüfsignal kennzeichnet das Ergebnis der Prüfung. Als Unfallsensoren kommen vorliegend ausgelagerte Beschleunigungs-, und/oder Druck-, und /oder Umfeldsensoren und/oder Körperschallsensoren infrage. Es ist möglich, dass ein solcher Unfallsensor sich auch innerhalb eines Steuergeräts befinden kann. Die Schnittstelle kann softwaremäßig oder hardwaremäßig realisiert sein.

Insbesondere kann sie auch Teil der Auswerteschaltung sein, die selbst ein Mikrocontroller oder Mikroprozessor sein kann. Es ist möglich, dass es sich dabei jedoch auch um einen ASIC handelt. Die Prüfmeldung, die der Unfallsensor an die Auswerteschaltung überträgt, weist bereits eine Prüfung des Unfallsensors auf, wobei die Auswerteschaltung dann in Abhängigkeit von der Prüfmeldung das Prüfsignal erzeugt, das dann weiter verarbeitet werden kann. Der Test eines Unfallsensors betrifft insbesondere Speicherinhalte und die Erfindung ermöglicht dabei geringere Kosten durch weniger Siliziumfläche im Sensor im Vergleich zu einem Sensor-internen Test, eine verbesserte Prüftiefe bzw. Qualität und damit weniger Qualitätsprobleme im Einsatz bzw. bei der Fehlerkorrektur beim Einsatz.

Durch die in den abhängigen Ansprüchen aufgeführten Maßnahmen und Weiterbildungen sind vorteilhafte Verbesserungen des in den unabhängigen Patenansprüchen angegebenen Steuergeräts bzw. der in den unabhängigen Patenansprüchen angegebenen Vorrichtungen bzw. des in den unabhängigen Patentansprüchen angegebenen Verfahrens möglich.

Besonders vorteilhaft ist, dass die Auswerteschaltung das Prüfsignal in Abhängigkeit von der Änderung der Prüfmeldung erzeugt. Das heißt, die Prüfmeldung an sich wird nicht analysiert, sondern lediglich eine Änderung zwischen verschiedenen Prüfmeldungen, die zeitlich aufeinander folgen. Dies ist eine besonders einfache und kostenneutrale Lösung, um eine solche Auswertung zu gestalten.

Weiterhin ist es vorteilhaft, dass das Prüfsignal als Warnsignal ausgegeben wird, wenn mindestens N Fehler bei der Prüfmeldung aufgetreten sind. Diese Fehler, die bei einer Prüfsumme auftreten, können gleichzeitig oder zeitlich aufeinander folgend geschehen. Die Idee ist, dass bei einem Sensor mit implementiertem ECC (Error-Correction-Code), der N-1 Fehler intern sicher korrigiert, ein Fehlerflag im System gesetzt wird, sobald N-1 Fehler überschritten sind und damit keine Korrektur mehr möglich ist. Je mehr Fehler korrigiert werden können, desto höher steigt der Aufwand für ECC und damit die Kosten. Das Vorgehen, die Anzahl Fehler im System zu kontrollieren, ermöglicht so die Kosten zu begrenzen ohne das Risiko einzugehen, Fehler im Speicher nicht zu entdecken. N ist insbesondere 2.

Vorteilhafterweise erzeugt der Unfallsensor bei der Überwachung eines eigenen Speichers die Prüfmeldung, wobei dieser Speicher insbesondere ein EEPROM ist. Es können analog ausgebildete Speichermittel verwendet werden, die ebenfalls eine dauerhaftere Speicherung ermöglichen. Das heißt, die Prüfmeldung wird in Anhängigkeit von einer Prüfsummenberechnung durch den Unfallsensor erzeugt. Dabei kann der Unfallsensor das gesamte Ergebnis der Prüfsummenberechnung oder nur einen Teil davon an die Auswerteschaltung, also das Steuergerät, übertragen.

Ausführungsbeispiele der Erfindung sind in der Zeichnung dargestellt und werden in der nachfolgenden Beschreibung näher erläutert.

Es zeigen:
- Figur 1: ein Blockschaltbild der erfindungsgemäßen Vorrichtung bzw. des erfindungsgemäßen Steuergeräts,
- Figur 2: ein Blockschaltbild eines Unfallsensors,
- Figur 3: ein Beispiel für ein sicheres Sensorabschalten bei einem Auftreten eines 2-Bit Fehlers,
- Figur 4: ein Beispiel für die Erkennung des Zurückkippens in den Ausgangszustand,
- Figur 5: ein Flussdiagramm des erfindungsgemäßen Verfahrens.

In modernen Einrichtungen zur Ansteuerung von Personenschutzmitteln werden zur Aufnahme von Crash-Signalen Unfallsensoren im Fahrzeug eingebaut, die abgesetzt vom üblicherweise zentral angeordneten Steuergerät sind. Mit diesen verteilten Sensoren, beispielsweise Seiten- oder Frontaufprallsensoren, können bestimmte Aufprallereignisse wie Seitenkollision oder Frontkollision besser und treffender charakterisiert werden. Auch ein Geschwindigkeitsvorteil resultiert aus dieser Verteilung der Sensoren. Solche Unfallsensoren weisen jedoch selbst Speicher auf, deren Integrität geprüft werden muss, und zwar über die ganze Lebenszeit des Unfallsensors. Als Speicher kommen so genannte PROM, EPROM oder EEPROM infrage. Eine Überprüfung solcher Speicher ist mittels einer Prüfsummenberechnung oder CRC-Prüfung möglich. Solche Prüfsummenberechnungen sind weit bekannt und als beispielhafte Referenz wird A. Tanenbaum: Computer networks, second edition, 1989, Englewood Cliffs, Prentice-Hall, Seiten 208 - 212 angegeben. Dieser Inhalt wird durch diesen Verweis eingefügt. Diese Prüfung ist notwendig, da es möglich ist, dass sich vereinzelte Speicherzellen in ihrem Zustand im Laufe der Zeit ändern können. Diese Testmöglichkeit ist umso wichtiger, wenn Abgleichdaten im Sensor hinterlegt werden müssen, die die korrekte Funktion über Lebensdauer bzw. Genauigkeit über die Lebensdauer sicherstellen. Oftmals ist für ein solches Prüfkonzept ein sinnvoller Kompromiss zwischen Aufwand im Sensor, beispielsweise Anzahl der CRC-Checkbits, und der Sicherheit des Tests. Dies ist umso relevanter, wenn ASIC -Technologien zum Einsatz kommen, die über keine ausreichend Kleinspeicherzellen verfügen und wenn kein ASIC-externer Speicher im Sensor vorgesehen ist.

Erfindungsgemäß wird ein Steuergerät bzw. Eine Vorrichtung bzw. ein Verfahren vorgeschlagen, die es ermöglichen, Speicherinhalte von vor allen peripheren Sensoren mit geringem Aufwand sicher zu überprüfen bzw. zu korrigieren. Die Erfindung ist jedoch nicht nur auf externe Sensoren anwendbar, auch auf interne Sensoren, die eine eigene Prüfsummenberechnung haben.

Bei ausgelagerten Drucksensoren oder Beschleunigungssensoren sind interne Speicher wie ein E²PROM vorhanden, in dem Abgleich aber auch fertigungs- und kundenrelevante Daten wie beispielsweise eine elektronische Seriennummer hinterlegt werden. Im Interesse einer hohen Systemsicherheit ist ein 100 % sicherer Test des korrekten Speicherinhalts von erheblichem Interesse.

Speicherfehler können 1-Bit- oder Mehr-Bit-Fehler sein. Abhängig von Fehlermechanismus sind Mehr-Bit-Fehler unter Umständen sehr viel unwahrscheinlicher als 1-Bit-Fehler. Wenn beispielsweise die Programmierung eines Sensors bei falscher Programmierspannung erfolgt, ist naturgemäß jedes Bit dieses Sensors massiv stärker gefährdet und damit sind auch Mehr-Bit-Fehler deutlich wahrscheinlicher.

Daher wird vorgeschlagen, dass der Sensor der 1- und Mehr-Bit-Fehler im Speicher erkennt und ggf. korrigiert oder anzeigt, wenn er den erkannten Fehler nicht korrigieren kann. Dieses allgemeine Ziel kann in der Regel nicht zu hundert Prozent erfüllt werden, da ansonsten ein sehr großer redundanter Speicherplatz notwendig werden würde und entsprechende Auswerte-Algorithmen.

Erfindungsgemäß wird im Sensor ein gängiges und vom Aufwand her überschaubares CRC-Verfahren angewendet, beispielsweise 8 CRC-Bits pro 32 Bit Block und die CRC-Signatur oder eine geeignete Untermenge, z. B. während der Initialisierungsphase an das Steuergerät übertragen. Das Steuergerät speichert diese Signatur in einem passenden, permanenten Speicher, beispielsweise einem Flash-Speicher und prüft bei allen weiteren Initialisierungen des Sensors, ob sich eine Änderung der Signatur ergeben hat. Im Fall der 8-Bit CRC pro 32 Bit Block erlaubt das Steuergerät genau eine Änderung der Signatur, die bei einem 1-Bit-Fehler entsteht oder korrigiert werden kann. Tritt eine weitere Änderung während des Sensor-Lebens auf, wird der Sensor als schlecht gekennzeichnet und eine Warnmeldung des Systems erzeugt. Das heißt, das Steuergerät erlaubt genau zwei verschiedene Prüfsummen je Sensor, eine im fehlerfreien Betrieb und eine zweite bei einem 1-Bit-Fehler. Eine Änderung auf eine dritte Checksumme oder auf eine Prüfsumme, die nicht durch einen 1-Bit Fehler erzeugt werden kann, zeigt dem Steuergerät an, dass der Sensor als "schlecht" zu kennzeichnen ist.

Bei der genannten 8-Bit CRC pro 32 Bit Block kann ein 1-Bit-Fehler zu hundert Prozent erkannt und korrigiert werden. Ein 2-Bit-Fehler allerdings nur mit 70 - 80 %iger Sicherheit erkannt werden und unterschieden werden von einem 1-Bit-Fehler. Korrigiert werden kann dieser 2-Bit-Fehler nicht. Würde also, wie bisher üblich, der Speicherinhalt nur vom Sensor selbst geprüft werden, könnte ein 2-Bit-Fehler von einem 1-Bit-Fehler nicht sicher unterschieden werden - damit kann auch der Korrektur des Sensors nicht hundert Prozent vertraut werden. Abhängig vom Sicherheitskonzept kann daher auch eine 8-Bit CRC-Methode nicht als Garant für eine sichere Funktionalität dienen und das Steuergerät müsste auch allen vom Sensor gemeldeten 1-Bit-Fehlern misstrauen und den Sensor als "schlecht" kennzeichnen. Unter diesen Voraussetzungen kann das Ziel, Speicher-Fehler im Feld zu korrigieren, um die Ausfallrate zu senken, nicht erreicht werden. Anders ist die Situation, wenn das vorgeschlagene, erfindungsgemäße Verfahren bzw. das erfindungsgemäße Steuergerät bzw. die erfindungsgemäße Vorrichtung zum Einsatz kommen. Da Speicherfehler in 2 oder mehreren Zellen praktisch nicht gleichzeitig auftreten, erkennt das Steuergerät, wenn das erst Bit seinen Inhalt ändert oder merkt sich die entsprechende Prüfsumme. Kippt ein weiteres Bit, wird dies nicht sicher vom Sensor, aber vom Steuergerät sofort erkannt und der Sensor kann als "unsicher" gekennzeichnet werden. Dadurch besteht tatsächlich die Möglichkeit, 1-Bit-Fehler sicher zu erkennen, sicher von Mehr-Bit-Fehlern zu trennen und damit sicher zu korrigieren. 1 Bit-Fehler würden so nicht mehr zu Feldausfällen führen. Damit würde die Qualitäts-Statistik des Produkts entsprechend verbessert. Selbstverständlich ist das Beispiel 8-Bit CRC je 32 Bit Speicher nur als Beispiel zu verstehen. Das Prinzip ist übertragbar auf alle möglichen Kombinationen von Speicherlängen und Checkbit-Konstellationen.

Eine weitere Möglichkeit ist die Übertragung von nur einer Teilmenge an CRC-Checkbits an das Steuergerät, die lediglich ausreichend sein muss für die sichere Unterscheidung von 1-Bit und Mehr-Bit-Fehlern im Steuergerät.

Das Verfahren ist auch gut anwendbar auf größere Speicherbereiche bzw. auf definierte Bitmuster innerhalb eines Speicherbereiches oder nur auf Teile des Speichers mit kritischem Inhalt.

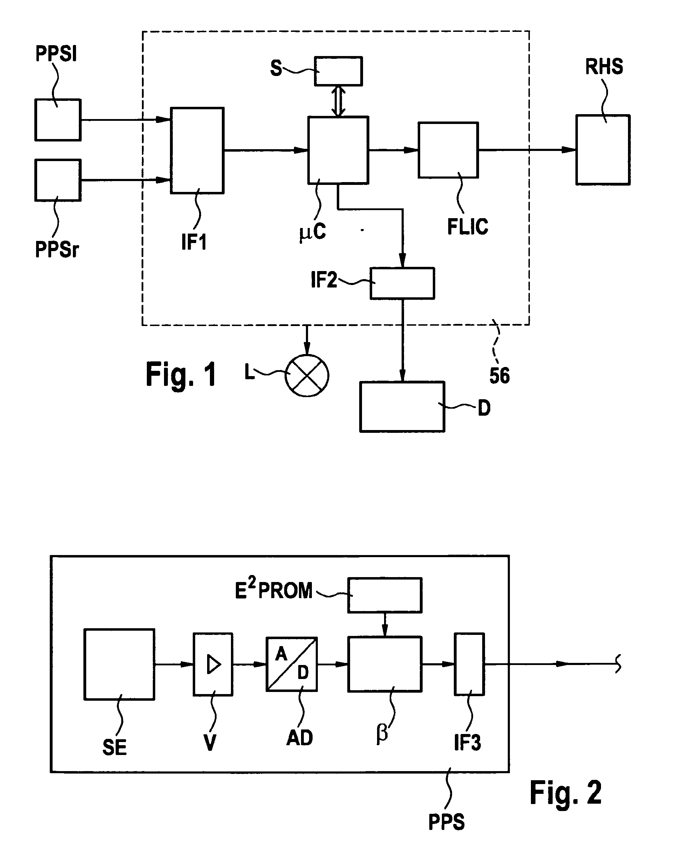

Figur 1 erläutert in einem Blockschaltbild die erfindungsgemäße Vorrichtung bzw. das erfindungsgemäße Steuergerät. An einem Steuergerät SG sind zwei Drucksensoren PPSI und PPSr angeschlossen, wobei PPSI an der linken Fahrzeugseite angeordnet ist und PPSr an der rechten Fahrzeugseite. Diese Drucksensoren dienen also als Seitenaufprallsensoren. Die Drucksensoren PPSI und PPSr sind dabei an einen Interface-Baustein, also eine Schnittstelle IF 1, angeschlossen. Die Schnittstelle IF 1 sorgt für den Weitertransport der von den Drucksensoren PPSI und PPSr empfangenen Daten. Die Daten können auch in der Schnittstelle IF 1 gepuffert werden. Die Daten werden dann von der Schnittstelle IF 1, die auch aus mehreren Schnittstellen aufgebaut sein kann, und zwar für jeden Sensor eine einzige, an einen Mikrocontroller µC, der vorliegend als die Auswerteschaltung verwendet wird. Der Mikrocontroller µC ist über einen Datenein- und - ausgang mit einem Speicher S verbunden, und über einen Ausgang mit einer Zündkreisschaltung-Flick, die vom Steuergerät SG ausgelagerte Personenschutzmittel wie Airbags oder Gurtstraffer RHS ansteuert. Die Ansteuerung geschieht natürlich nur, wenn Sensorsignale eine solche entsprechende Aufprallsituation erfassen. Der Mikrocontroller µC ist jedoch über eine weitere Schnittstelle IF 2 an eine Lampe L und eine Anzeige D angeschlossen. Die Lampe L wird bei einer Fehlfunktion, also beispielsweise auch bei einem Ausfall eines Sensors, angesteuert und zum Leuchten gebracht. Gleichfalls kann auch die Anzeige D den entsprechenden Fehler optisch darstellen. Dies kann auch durch eine akustische Wiedergabe ergänzt werden. Die erfindungsgemäße Vorrichtung umfasst also das erfindungsgemäße Steuergerät und die ausgelagerten Sensoren.

Figur 2 erläutert in einem Blockschaltbild den Aufbau eines Unfallsensors. Im Sensor PPS ist ein Sensorelement SE vorgesehen, das mikromechanisch hergestellt wurde. Das heißt, dass Beschleunigungen oder Druckschwankungen zu beispielsweise Positionsveränderungen des Sensorelements SE führen, das beispielsweise als Membran ausgeführt ist. Diese Änderungen führen zu Kapazitätsschwankungen, die am Sensorelement SE gemessen werden können. Diese Größe wird dann im Verstärker V verstärkt, um dann im Analog-Digital-Wandler AD digitalisiert zu werden. Das digitalisierte Signal geht an einen Bearbeitungsbaustein B, der Daten aus dem Speicher EEPROM lädt, um über die Schnittstelle IF 3 dann diese Daten zum Steuergerät über die Leitung zu übertragen. Der Aufbau, sowohl des Steuergeräts, als auch des Sensors PPS, sind hier nur der Einfachheit halber dargestellt und sind in Wirklichkeit weit komplexer aufgebaut.

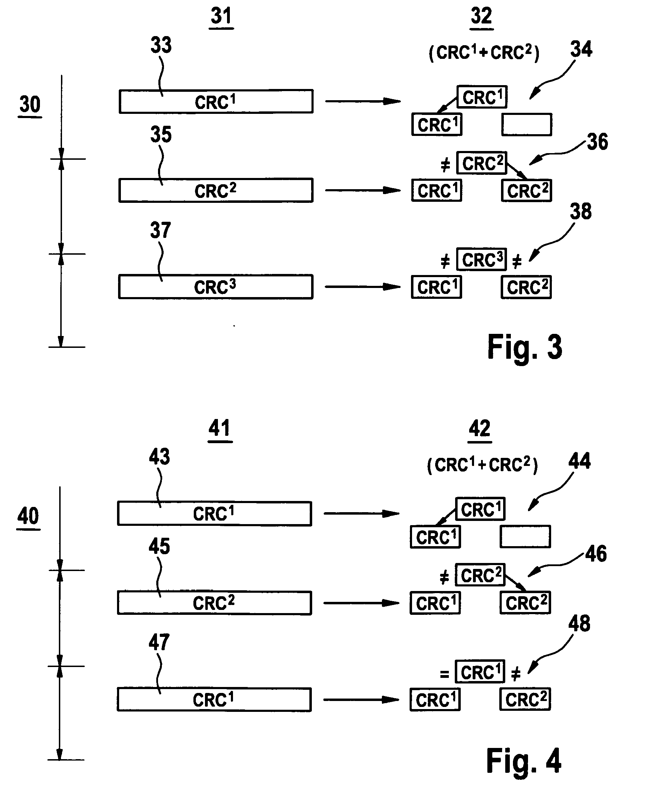

Figur 3 zeigt ein Beispiel eines sicheren Sensorabschaltens bei einem Auftreten eines 2-Bit-Fehlers gemäß dem erfindungsgemäßen Verfahren. Durch die Achse ist der Betrieb des Sensors über die Lebenszeit hier durch das Bezugszeichen 30 gekennzeichnet. In der ersten Spalte 31 sind die Aktionen im Sensor vermerkt, während in der Spalte 32 die Aktionen im Steuergerät vermerkt sind. Dabei wird zunächst eine Übertragung in der Initialisierungsphase in der Spalte 31 vorgenommen, wobei die Prüfmeldung 33 zum Steuergerät übertragen wird. Das Steuergerät speichert im Schritt 34 dann die empfangene Prüfmeldung ab, und zwar in einem permanenten Speicher. In der nächsten Zeile ändert ein Speicherbit im Sensor seinen Zustand, sodass dann die Prüfmeldung CRC², durch das Bezugszeichen 35 gekennzeichnet, zum Steuergerät übertragen wird. Das Steuergerät erkennt dann in Verfahrensschritt 6, dass CRC¹ und CRC² nicht übereinstimmen und speichert damit CRC² ab, erkennt damit einen 1-Bit-Fehler und reagiert dahin gehend, dass der Sensorbetrieb fortgesetzt wird. In der nächsten Zeile wird ein weiteres Bit im Sensor im Speicher seinen Zustand ändern, sodass dann die Prüfmeldung CRC3, durch das Bezugszeichen 37 gekennzeichnet, zum Steuergerät übertragen wird. Das Steuergerät erkennt den Verfahrensschritt 38, das CRC³ mit den beiden abgespeicherten Prüfmeldungen nicht übereinstimmt und reagiert dann folgerichtig, dass ein 2-Bit Fehler vorliegt und der Sensorbetrieb muss gestoppt werden, also es wird ein entsprechendes Prüfsignal ausgegeben, dass der Sensorbetrieb zu stoppen ist und ggf. wird eine Anzeige und /oder eine Warnlampe angesteuert.

Figur 4 zeigt eine Erkennung eines Zurückkippens in den Ausgangszustand, sodass der Betrieb der Vorrichtung und damit des Sensors fortgesetzt wird. Im Bezugszeichen 40 wird erneut der Betrieb über die Lebenszeit angezeigt, mit dem Bezugszeichen 41 der Sensor und mit dem Bezugszeichen 42 die Spalte für das Steuergerät. Zunächst wird wiederum in der Initialisierungsphase des Sensors vom Sensor die Prüfmeldung 43 CRC¹ zum Steuergerät übertragen und das Steuergerät speichert im Verfahrensschritt 44 CRC¹ in einen permanenten Speicher ab. In der nächsten Zeile ändert nunmehr ein Bit im Speicher im Sensor seinen Zustand und folgerrichtig wird die Prüfmeldung CRC², mit dem Bezugszeichen 45 gekennzeichnet, zum Steuergerät übertragen, wobei das Steuergerät nun feststellt, dass ein 1-Bit-Fehler vorliegt, denn CRC² ist ungleich CRC¹, sodass dann auch CRC² in den permanenten Speicher abgespeichert wird. In der letzten Zeile kippt nun das Bit zurück in den Ausgangszustand und es wird wiederum CRC¹, gekennzeichnet durch das Bezugszeichen 47, zum Steuergerät übertragen. Das Steuergerät erkennt, dass diese Prüfmeldung bereits abgespeichert ist, sodass dann der Sensorbetrieb fortgesetzt werden kann.

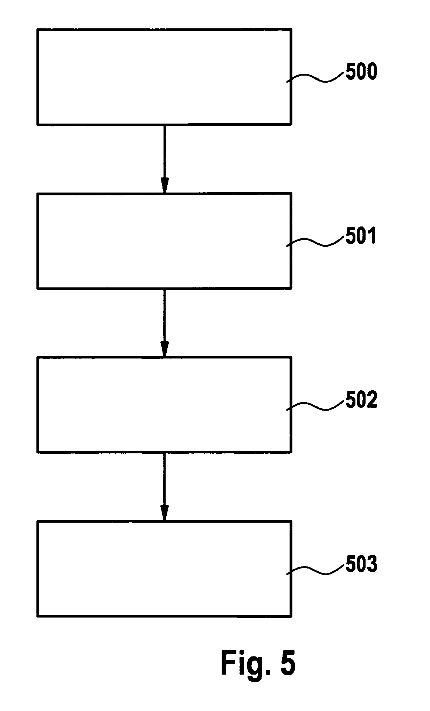

Figur 5 zeigt in einem Flussdiagramm das erfindungsgemäße Verfahren. Im Verfahrensschritt 500 wird, wie oben dargestellt, die Prüfsumme im Unfallsensor anhand der Speicher ermittelt. Diese Prüfsumme wird dann ganz oder teilweise an das Steuergerät in Verfahrensschritt 501 übertragen. Das Steuergerät speichert in der Initialisierungsphase des Sensors die Prüfmeldung ab, später wird die Prüfmeldung mit der bereits abgespeicherten Prüfmeldung verglichen, wobei bei einem 1-Bit-Fehler auch die zweite Prüfmeldung dann abgespeichert wird, aber wenn auch dies schon geschehen ist und eine dritte Prüfmeldung auftaucht, wird auch ein 2-Bit-Fehler erkannt. Dies geschieht in Verfahrensschritten 502 und 503. Wie oben dargestellt, kann aber auch ein Zurückspringen durch das erfindungsgemäße Verfahren erkannt werden.

## Patentansprüche

1. Steuergerät (SG) zur Ansteuerung von Personenschutzmitteln (RHS) mit einer Schnittstelle (IF I), an die wenigstens ein Unfallsensor anschließbar ist, wobei die Schnittstelle (IF 1) derart mit einer Auswerteschaltung (µC) verbunden ist, dass die Schnittstelle (IF 1) Prüfmeldungen des wenigstens einen Unfallsensors (PPS) an die Auswerteschaltung (µC) überträgt, **dadurch gekennzeichnet, dass** die Auswerteschaltung (µC) derart konfiguriert ist, dass die Auswerteschaltung (µC) in Abhängigkeit von einer Änderung der Prüfmeldungen ein Prüfsignal erzeugt.

2. Steuergerät nach Anspruch 1, **dadurch gekennzeichnet, dass** das Prüfsignal ein Warnsignal ist, wenn mindestens N Fehler bei der Prüfmeldung aufgetreten sind.

3. Vorrichtung zur Ansteuerung von Personenschutzmitteln mit einem Steuergerät nach einem der Ansprüche 1 oder 2, und dem wenigstens ein Unfallsensor, der außerhalb des Steuergerätes (SG) angeordnet ist, wobei der wenigstens eine Unfallsensor (PPS) derart konfiguriert ist, dass der wenigstens eine Unfallsensor (PPS) für einen Speicherinhalt eine Prüfsummenberechnung durchführt, wobei der wenigstens eine Unfallsensor (PPS) in Abhängigkeit von der Prüfsummenberechung die Prüfmeldung erzeugt.

4. Vorrichtung nach Anspruch 3, **dadurch gekennzeichnet, dass** der wenigstens eine Unfallsensor (PPS) als Speicher ein EEPROM aufweist.

5. Verfahren zur Erzeugung eines Prüfsignals für wenigstens einen Unfallsensor (PPS), wobei Prüfmeldungen on dem wenigstens einen Unfallsensor (PPS) an einer Auswerteschaltung (µC) übertragen wird, **dadurch gekennzeichnet, dass** die Auswerteschaltung (µC) das Prüfsignal in Abhängigkeit von einer Änderung der Prüfmeldungen erzeugt.

6. Verfahren nach Anspruch 5 , **dadurch gekennzeichnet, dass** das Prüfsignal als ein Warnsignal erzeugt wird, wenn mindestens zwei Fehler bei der Prüfmeldung aufgetreten sind.

7. Verfahren nach Anspruch 6, **dadurch gekennzeichnet, dass** die mindestens zwei Fehler bei unterschiedlichen Bit detektiert werden.

8. Verfahren nach einem der Ansprüche 5 bis 7, **dadurch gekennzeichnet, dass** die Prüfmeldung in Anhängigkeit von einer Prüfsummenberechung durch den wenigstens einen Unfallsensor (PPS) erzeugt wird.

9. Verfahren nach Anspruch 8, **dadurch gekennzeichnet, dass** der wenigstens eine Unfallsensor (PPS) einen Teil eines Ergebnisses der Prüfsummenberechnung an die Auswerteschaltung (µC) überträgt.

## Claims

1. Control device (SG) for actuating personal protection means (RHS), having an interface (IF 1) to which at least one accident sensor can be connected, the interface (IF 1) being connected to an evaluation circuit (µC) in such a manner that the interface (IF 1) transmits test messages from the at least one accident sensor (PPS) to the evaluation circuit (µC), **characterized in that** the evaluation circuit (µC) is configured such that the evaluation circuit (µC) generates a test signal on the basis of a change in the test messages.

2. Control device according to Claim 1, **characterized in that** the test signal is a warning signal if at least N errors have occurred in the test message.

3. Apparatus for controlling personal protection means, having a control device according to either of Claims 1 and 2 and the at least one accident sensor which is arranged outside the control device (SG), the at least one accident sensor (PPS) being configured such that the at least one accident sensor (PPS) carries out a checksum calculation for a memory content, the at least one accident sensor (PPS) generating the test message on the basis of the checksum calculation.

4. Apparatus according to Claim 3, **characterized in that** the at least one accident sensor (PPS) has an EEPROM as a memory.

5. Method for generating a test signal for at least one accident sensor (PPS), test messages being transmitted from the at least one accident sensor (PPS) to an evaluation circuit (µC), **characterized in that** the evaluation circuit (µC) generates the test signal on the basis of a change in the test messages.

6. Method according to Claim 5, **characterized in that** the test signal is generated as a warning signal if at least two errors have occurred in the test message.

7. Method according to Claim 6, **characterized in that** the at least two errors are detected in different bits.

8. Method according to one of Claims 5 to 7, **characterized in that** the test message is generated by the at least one accident sensor (PPS) on the basis of a checksum calculation.

9. Method according to Claim 8, **characterized in that** the at least one accident sensor (PPS) transmits part of a result of the checksum calculation to the evaluation circuit (µC).

## Revendications

1. Appareil de commande (SG) destiné à commander des moyens (RHS) de protection des personnes,
l'appareil de commande présentant une interface (IF 1) à laquelle au moins un détecteur d'accident peut être raccordé,
l'interface (IF 1) étant reliée à un circuit d'évaluation (µC) de telle sorte que l'interface (IF 1) transmette au circuit d'évaluation (µC) des messages de vérification du ou des détecteurs d'accident (PPS), **caractérisé en ce que**
le circuit d'évaluation (µC) est configuré de telle sorte que le circuit d'évaluation (µC) forme un signal de vérification en fonction d'une modification des messages de vérification.

2. Appareil de commande selon la revendication 1, **caractérisé en ce que** lorsqu'au moins N erreurs sont survenues dans le message de vérification, le signal de vérification est un signal d'avertissement.

3. Ensemble de commande de moyens de protection des personnes,
l'ensemble présentant un appareil de commande selon l'une des revendications 1 ou 2 et au moins un détecteur d'accident disposé à l'extérieur de l'appareil de commande (SG),
le ou les détecteurs d'accident (PPS) étant configurés de telle sorte que le ou les détecteurs d'accident (PPS) exécutent un calcul de somme de vérification du contenu d'une mémoire,
le ou les détecteurs d'accident (PPS) formant le message de vérification en fonction du calcul de somme de vérification.

4. Ensemble selon la revendication 3, **caractérisé en ce que** le ou les détecteurs d'accident (PPS) présentent comme mémoire une EEPROM.

5. Procédé de formation d'un signal de vérification d'au moins un détecteur d'accident (PPS), des messages de vérification étant transmis par le ou les détecteurs d'accident (PPS) à un circuit d'évaluation (µC),
**caractérisé en ce que**
le circuit d'évaluation (µC) forme le signal de vérification en fonction d'une modification des messages de vérification.

6. Procédé selon la revendication 5, **caractérisé en ce que** si au moins deux erreurs sont survenues dans le message de vérification, le signal de vérification est formé comme signal d'avertissement.

7. Procédé selon la revendication 6, **caractérisé en ce que** les deux ou plusieurs erreurs sont détectées à différents bits.

8. Procédé selon l'une des revendications 5 à 7, **caractérisé en ce que** le message de vérification est formé en fonction d'un calcul de somme de vérification effectué par le ou les détecteurs d'accident (PPS).

9. Procédé selon la revendication 8, **caractérisé en ce que** le ou les détecteurs d'accident (PPS) transmettent une partie du résultat du calcul de la somme de vérification au circuit d'évaluation (µC).
